# EUROPÄISCHE PATENTANMELDUNG

(11) **EP 1 026 035 A2**
(43) Veröffentlichungstag der Anmeldung: **09.08.2000**
(21) Anmeldenummer: 00102442.1
(22) Anmeldetag: 04.02.2000
(51) Int. Cl.: B60R 1/02

(54) **System zur automatischen Aussenspiegelverstellung bei Kurvenfahrten von Fahrzeugen**

(30) Priorität: 05.02.1999 DE 19904778
(71) Anmelder: MEKRA Lang GmbH & Co. KG, 90765 Fürth (DE)
(72) Erfinder: Lang, Heinrich, 91465 Ergersheim (DE); Renner, Christopher, 91472 Ipsheim (DE)
(74) Vertreter: Winter, Brandl, Fürniss, Hübner, Röss, Kaiser, Polte Partnerschaft

(57) **Zusammenfassung**

Beschrieben wird ein System zur automatischen Außenspiegelverstellung bei Kurvenfahrten von Fahrzeugen, insbesondere von Nutzfahrzeugen mit Anhängern, Sattelzügen, Gelenkbussen oder dergl., mit einem Sensor zur Erfassung einer Drehung des Fahrzeugs um eine vertikale Achse, einer Steuereinrichtung, die mit dem Sensor verbunden ist, und einer mit der Steuereinrichtung verbundenen elektromotorischen Spiegelverstelleinrichtung zum Nachführen des Außenspiegels aus einer Nulllage entsprechend der Drehung des Fahrzeugs um seine vertikale Achse. Der Sensor zur Erfassung der Drehbewegung des Fahrzeugs um seine vertikale Achse ist hierbei ein Drehratensensor nach dem Kreiselprinzip.

## Beschreibung

Die Erfindung betrifft ein System zur automatischen Außenspiegelverstellung bei Kurvenfahrten von Fahrzeugen nach Anspruch 1 sowie einen Außenspiegel mit einem derartigen System nach Anspruch 15.

Bei Kurvenfahren von Fahrzeugen, insbesondere bei Nutzfahrzeugen mit Anhängern, Sattelschleppern, Gelenkbussen etc. wird durch die Kurvenfahrt auf der Kurveninnenseite der Sichtbereich durch das Abbiegen eingeschränkt. Dies führt sehr häufig zu tödlichen Unfällen von Fußgängern und Radfahrern, die sich seitlich an der Kurveninnenseite aufhalten und vom Fahrer aufgrund des eingeschränkten Sichtfelds bei der Kurvenfahrt nicht bemerkt werden. Um dieses Problem zu vermeiden, sind Systeme bekannt, bei denen der kurveninnenseitige Außenspiegel bei Kurvenfahrten sich automatisch entsprechend der Kurvenfahrt verstellt, so daß der Sichtbereich über die gesamte Fahrzeuglänge bis an das Fahrzeugende erhalten bleibt.

Aus der WO-A-95 23079 ist ein derartiges System bekannt, bei der bei Sattelschleppern mittels Ultraschallsensoren der sich bei der Kurvenfahrt ändernde Abstand zwischen der Zugmaschine und dem Auflegeranhänger erfaßt wird. Aus der erfaßten Abstandsänderung durch die Kurvenfahrt bzw. das Abknicken der Zugmaschine gegenüber dem Auflegeranhänger wird ein Signal zum Nachführen des kurveninnenseitigen Außenspiegels gewonnen. Ein derartiges auf Ultraschall basierendes System ist auch aus der US-PS-5,306,953 und der US-PS-5,132,851 bekannt.

Ebenfalls aus der WO-A-95 23079 ist es bekannt, sowohl auf den Aufliegeranhänger als auch auf der Zugmaschine je einen Magnetfeldsensor anzubringen, die nach Art eines Magnetkompasses das Erdmagnetfeld erfassen. Aus dem Differenzsignal der beiden Magnetfeldsensoren wird ein Signal für die Drehung des Fahrzeugs um seine vertikale Achse abgeleitet. Die Verwendung von Magnetsensoren führt ebenfalls zu Problemen, da durch die Vielzahl von elektrischen Verbrauchern in einem Fahrzeug mit zum Teil erheblichen Stromstärken - aufgrund der geringen Spannung - erhebliche Magnetfelder entstehen, die die Funktion der Magnetfeldsensoren stören.

Ausgehend von der WO-A-95 23079 ist es daher Aufgabe der vorliegenden Erfindung, ein System zur automatischen Außenspiegelverstellung bei Kurvenfahrten von Fahrzeugen, insbesondere von Nutzfahrzeugen mit Anhängern und Sattelzügen, anzugeben, das zuverlässig arbeitet und auch für unterschiedlichste Auflegeranhängertypen geeignet ist. Außerdem ist es Aufgabe der vorliegenden Erfindung, eine Kombination eines derartigen Systems mit einem herkömmlichen Außenspiegel für Nutzfahrzeuge anzugeben.

Die Lösung dieser Aufgabe erfolgt durch die Merkmale des Anspruchs 1 bzw. 15.

Dadurch, daß die Drehbewegung des Fahrzeugs um die vertikale Achse mit einem nach dem Kreiselprinzip arbeitenden Drehratensensor erfaßt wird, können Verschmutzungen, wie sie bei Nutzfahrzeugen unweigerlich auftreten, und magnetische Felder aufgrund der elektrischen Verbraucher die Funktionsweise des Nachführsystems nicht beeinträchtigen. Dadurch ist es möglich, den Drehratensensor an einem beliebigen Ort im Fahrzeug anzubringen und insbesondere ist es dadurch möglich, den Drehratensensor in einem herkömmlichen Außenspiegel zu integrieren, so daß der automatisch nachgeführte Außenspiegel als Gesamtsystem hergestellt und verkauft werden kann.

Gemäß einer vorteilhaften Ausgestaltung der Erfindung ist die Spiegelverstelleinrichtung des Nachführsystems die elektromagnetische Spiegelverstelleinrichtung eines herkömmlichen Außenspiegels, so daß eine zusätzliche Komponente vermieden wird.

Gemäß einer vorteilhaften Weiterbildung der Erfindung erfolgt die Verstellung des Außenspiegels kontinuiertlich entsprechend der erfaßten Drehung des Fahrzeugs um die vertikale Achse, d. h. ruckartige Spiegelbewegungen, die den Fahrer irritieren könnten, werden vermieden.

Gemäß einer weiteren vorteilhaften Ausgestaltung der Erfindung wird bei der Nachführung die Fahrgeschwindigkeit des Fahrzeugs berücksichtigt, d.h. bei hoher Fahrgeschwindigkeit erfolgt die Verstellung schneller als bei niedriger Fahrgeschwindigkeit. Dadurch kann die Funktionsweise des erfindungsgemäßen Systems in verschiedenen Geschwindigkeitsbereichen gewährleistet werden. Ein zu langsames oder zu schnelles Verstellen bzw. Nachführen der Außenspiegel wird dadurch vermieden.

Gemäß einer weiteren vorteilhaften Ausgestaltung der Erfindung erfolgt die Nachführung bei Kurvenfahrten nur in einem bestimmten Geschwindigkeitsbereich zwischen einer minimalen Geschwindigkeit und einer maximalen Geschwindigkeit. Dadurch wird verhindert, daß bei Rangierfahrten, die üblicherweise mit sehr geringer Geschwindigkeit durchgeführt werden, der Spiegel nicht nachgeführt wird und so Irritationen des Fahrers vermieden werden.

Gemäß einer vorteilhaften Weiterbildung der Erfindung wird die Geschwindigkeit des Fahrzeugs unmittelbar aus einem üblicherweise in Fahrzeugen vorliegenden Geschwindigkeitssignal abgezweigt und der Steuereinrichtung zugeführt. Ein zusätzlicher Geschwindigkeitssensor erübrigt sich daher.

Gemäß einer weiteren vorteilhaften Ausgestaltung erfolgt die Geschwindigkeit, mit der der Außenspiegel verstellt wird, entsprechend bzw. proportional zur Drehgeschwindigkeit des Fahrzeugs um seine vertikale Achse. In diesem Falle erübrigt sich daher die Verwertung eines Fahrgeschwindigkeitssignals.

Gemäß einer weiteren vorteilhaften Ausgestaltung der Erfindung erfolgt die Nachführung des Außenspiegels entsprechend der erfaßten Drehrichtung zwischen einer Null-lage und einer maximalen Auslenkung in zwei entgegengesetzten Drehrichtungen, d.h. wenn der Sensor eine Drehung um eine vertikale Achse bei beginnender Kurvenfahrt erfaßt, erfolgt die Auslenkung des Außenspiegels nach außen und wenn der Sensor erfaßt, daß das Fahrzeug wieder in Geradeausfahrt übergeht, wird der Außenspiegel wieder in entgegengesetzter Richtung in die Nulllage zurückgeführt.

Alternativ ist es bei einer einfachen Ausführungsform der Erfindung auch möglich, daß nur die Verstellung des Außenspiegels bei Kurvenfahrt entsprechend der erfaßten Drehung nur in eine Richtung erfolgt und die Rückstellung in die Nulllage automatisch nach einer bestimmten Zeitdauer erfolgt. Die Zeitdauer kann hierbei fest eingestellt werden oder sie kann sich auch nach der Fahrzeuggeschwindigkeit oder der Drehgeschwindigkeit bei der Kurvenfahrt richten.

Gemäß einer weiteren vorteilhaften Ausgestaltung der Erfindung ist das System zur Nachführung manuell ausschaltbar, was insbesondere beim Rangieren oder dann vorteilhaft ist, wenn der sich Fahrer durch die automatischen Nachführung irritiert fühlt.

Gemäß einer weiteren besonderen vorteilhaften Ausgestaltung der Erfindung ist der Drehratensensor bei Sattelzügen in der Zugmaschine angeordnet und in dem Aufliegeranhänger sind keinerlei Komponenten des erfindungsgemäßen Nachführsystems vorgesehen. Damit wird gewährleistet, daß beliebige Auflieger verwendet werden können, da das System ausschließlich in der Zugmaschine angeordnet ist.

Besonders vorteilhaft ist es hierbei, wenn das Nachführsystem in eine herkömmliche Außenspiegelanordnung mit elektromotischer verstellmöglichkeit integriert ist, da dann der Außenspiegel mit automatischer Nachführung als Gesamtsystem angeboten werden kann.

Die übrigen Unteransprüche beziehen sich auf weitere vorteilhafte Ausgestaltungen der Erfindung.

Weitere Einzelheiten, Merkmale und Vorteile der Erfindung ergeben sich aus der nachfolgenden Beschreibung einer beispielhaften Ausführungsform der Erfindung anhand der Zeichnung.

Es zeigt:
Fig. 1 eine schematische Darstellung zur Erläuterung des Grundprinzips eines automatisch bei Kurvenfahren nachgeführten Spiegels;
Fig. 2 ein Blockschaltbild einer beispielhaften Ausführungsform der vorliegenden Erfindung; und
Fig. 3 eine schematische Darstellung der Integration des erfindungsgemäßen Systems in einen Außenspiegel für Nutzfahrzeuge.

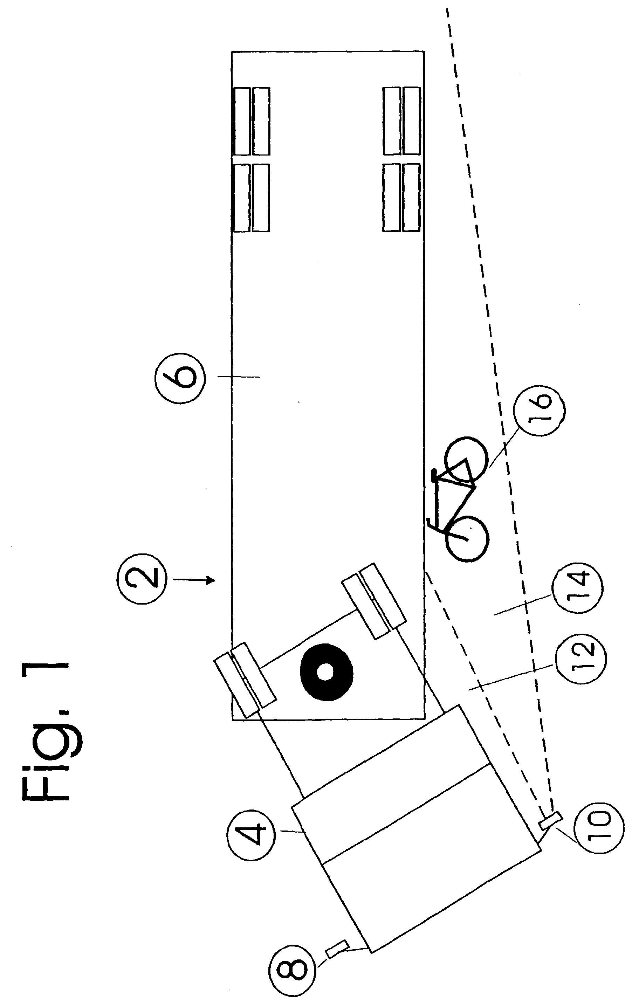

Fig. 1 zeigt einen Sattelschlepper 2 bestehend aus einer Zugmaschine 4 und einem Auflegeranhänger 6 beim Linksabbiegen an einer Kreuzung bzw. beim Durchfahren einer Linkskurve. An der Zugmaschine 4 sind schematisch ein rechter, kurvenaußenseitiger Außenspiegel 8 und ein linker, kurveninnenseitiger Außenspiegel 10 vorgesehen. Der kurveninnenseitige Außenspiegel 10 wird durch das erfindungsgemäße System bei der Kurvenfahrt automatisch verstellt und nachgeführt. Mit dem Bezugszeichen 12 wird der bei einer Kurvenfahrt eingeschränkte Sichtbereich eines Außenspiegels ohne Nachführung bezeichnet und mit den Bezugszeichen 14 wird der erweiterte Sichtbereich des nachgeführten Außenspiegels 10 bezeichnet. Aus Fig. 1 ist zu ersehen, daß durch den erweiterten Sichtbereich 14 des nachgeführten kurveninnenseitigen Außenspiegels 10 sich im Kreuzungsbereich an der rechten Seite des Sattelschleppers 2 befindliche Fußgänger oder Fahrradfahrer 16 vom Fahrer des Sattelschleppers 2 durch den kurveninnenseitigen Außenspiegel 10 gesehen werden können, während der Fußgänger 16 durch den eingeschränkten Sichtbereich 12 eines Spiegels ohne Nachführung nicht erfaßt wird. Der kurvenaußenseitige Außenspiegel 8 wird üblicherweise nicht nachgeführt, da, wie aus Fig. 1 zu ersehen ist, auch durch eine Nachführung des kurvenaussenseitigen Spiegels 8 das hintere Ende des Fahrzeugs 2 bzw. das Ende des Aufliegeranhängers 6 nicht einzusehen ist.

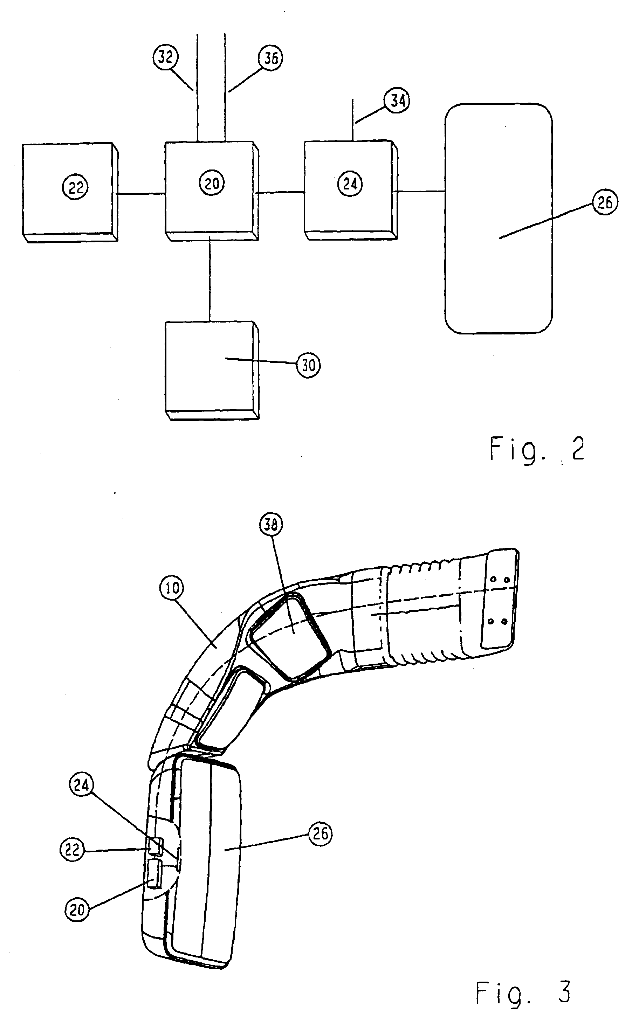

Fig. 2 zeigt ein Blockschaltbild einer beispielhaften Ausführungsform der vorliegenden Erfindung. Das erfindungsgemäße System umfaßt eine Steuereinrichtung 20 in Form eines Mikroprozessors oder Mikrocontrollers, einen mit der Steuereinrichtung 20 verbundenen Drehratensensor 22 nach dem Kreiselprinzip und eine mit der Steuereinrichtung 20 verbundene elektromotorische Spiegelverstelleinrichtung 24, durch die eine Spiegelscheibe 26 des kurveninnenseitigen Außenspiegels 10 verstellt werden kann. Eine Bedieneinheit 30 ist ebenfalls mit der Steuereinrichtung 20 verbunden. Mittels der Bedieneinheit 30 läßt sich das erfindungsgemäße System manuell abschalten bzw. einschalten und außerdem lassen sich über die Bedieneinheit 30 bestimmte Parameter des erfindungsgemäßen Systems, wie maximale Auslenkung bzw. maximaler Verstellbereich des Außenspiegels 10, Empfindlichkeit des Systems, d.h. bei welchen minimalen Drehwinkeln spricht das System an, automatische Rückstellzeit und dergleichen einstellen.

Weiterhin können mittels der Bedieneinheit 30 einige feste Stellungen des Außenspiegels 10 definiert oder festgelegt werden, beispielsweise drei verschiedene Stellungen, die von dem Außenspiegel 10 angefahren werden. Welche der festen Stellungen angefahren wird, kann abhängig von der Fahrzeug-Drehbewegung gemacht werden.

Mit dem Bezugszeichen 32 ist die Verbindung der Steuereinrichtung 20 mit einer nicht näher dargestellten Stromversorgung angedeutet, bei der es sich um die Stromversorgung des jeweiligen Fahrzeugs handelt. Das Bezugszeichen 34 bezeichnet die Stromzuführung für die Spiegelverstelleinrichtung 24. Das Bezugszeichen 36 zeigt die Zuführung eines Geschwindigkeitssignals zu der Steuereinrichtung 20 das aus dem Tachometer des jeweiligen Fahrzeugs abgeleitet wird.

Bei dem Drehratensensor 22 handelt es sich um einen Gyro-Sensor, wie er üblicherweise in Videokameras eingesetzt wird, um Verwackelungen zu vermeiden. Derartige Sensoren werden beispielsweise von der Firma Wuntronic GmbH in München angeboten und vertrieben.

Fig. 3 zeigt schematisch die Zugnaschine 4 mit den linken Außenspiegel 8 und den darin integrierten Komponenten des erfindungsgemäßen Systems. Drehratensensor 22, Steuereinrichtung 20 und Spiegelverstelleinrichtung 24 sind in das Spiegelgehäuse des Außenspiegels 8 integriert und über ein Kabel 38 wird die Verbindung zum Fahrzeuginneren der Zugmaschine 4 zur Stromversorgung und zur Bedieneinheit 30 hergestellt.

Bevorzugt kann die Spiegelnachführung nicht nur bei einer Vorwärts- sondern auch bei einer Rückwärtsfahrt des Fahrzeugs erfolgen.

### Bezugszeichenliste:

- 2: Sattelschlepper
- 4: Zugmaschine
- 6: Auflegeranhänger
- 8: kurvenaußenseitiger Außenspiegel
- 10: kurveninnenseitiger Außenspiegel
- 12: Sichtbereich ohne Nachführung
- 14: Sichtbereich mit Nachführung
- 16: Fahrradfahrer
- 20: Steuereinrichtung
- 22: Drehratensensor
- 24: Spiegelverstelleinrichtung
- 26: Spiegelverstelleinrichtung
- 30: Spiegelscheibe
- 32: Stromzuführung zur Steuereinrichtung 20
- 34: Stromzuführung zur Spiegelverstelleinrichtung 24
- 36: Geschwindigkeitssignalzuführung
- 38: Kabel

## Patentansprüche

1. System zur automatischen Außenspiegelverstellung bei Kurvenfahrten von Fahrzeugen, insbesondere von Nutzfahrzeugen mit Anhängern, Sattelzügen, Gelenkbussen oder dergl., mit
einem Sensor zur Erfassung einer Drehung des Fahrzeugs um eine vertikale Achse,
einer Steuereinrichtung, die mit dem Sensor verbunden ist, und
einer mit der Steuereinrichtung verbundenen elektromotorischen Spiegelverstelleinrichtung zum Nachführen des Außenspiegels aus einer Nulllage entsprechend der Drehung des Fahrzeugs um seine vertikale Achse,
**dadurch gekennzeichnet**,
daß der Sensor zur Erfassung der Drehbewegung des Fahrzeugs um seine vertikale Achse ein Drehratensensor nach dem Kreiselprinzip ist.

2. System nach Anspruch 2, dadurch gekennzeichnet, daß die elektromotorische Spiegelverstelleinrichtung die Spiegelverstelleinrichtung des zu verstellenden Außenspiegels ist.

3. System nach Anspruch 1 oder 2, dadurch gekennzeichnet, daß die Nachführung des Außenspiegels durch die Spiegelverstelleinrichtung kontinuierlich entsprechend der durch den Drehratensensor erfaßten Drehung erfolgt.

4. System nach Anspruch 1 oder 2, dadurch gekennzeichnet, daß die Nachführung des Außenspiegels durch die Spiegelverstelleinrichtung in festen Schritten entsprechend der durch den Drehratensensor erfaßten Drehung erfolgt.

5. System nach einem der vorhergehenden Ansprüche, dadurch gekennzeichnet, daß die Geschwindigkeit der Nachführung entsprechend der Fahrgeschwindigkeit des Fahrzeugs erfolgt.

6. System nach Anspruch 5, dadurch gekennzeichnet, daß die Nachführung erst ab einer minimalen Fahrzeuggeschwindigkeit erfolgt.

7. System nach Anspruch 5 oder 6, dadurch gekennzeichnet, daß die Nachführung nur bis zu einer maximalen Fahrzeuggeschwindigkeit erfolgt.

8. System nach einem der Ansprüche 5 bis 7, dadurch gekennzeichnet, daß der Steuereinrichtung ein Fahrzeuggeschwindigkeitssignal zugeführt ist.

9. System nach einem der vorhergehenden Ansprüche, dadurch gekennzeichnet, daß die Nachführung des Außenspiegels entsprechend der Drehgeschwinidgkeit des Fahrzeugs durch die Kurvenfahrt bei Vorwärts- und Rückwärtsfahrt erfolgt.

10. System nach einem der vorhergehenden Ansprüche, dadurch gekennzeichnet, daß die Nachführung des Außenspiegels entsprechend der Drehrichtung des Fahrzeugs erfolgt.

11. System nach einem der vorhergehenden Ansprüche 1 bis 9, dadurch gekennzeichnet, daß die Rückstellung des nachgeführten Außenspiegels in die Nulllage nach einer bestimmten Zeitdauer erfolgt.

12. System nach einem der vorhergehenden Ansprüche, dadurch gekennzeichnet, daß das System manuell ausschaltbar ist.

13. System nach einem der vorhergehenden Ansprüche, dadurch gekennzeichnet, daß der Drehratensensor temperaturkompensiert ist.

14. System nach einem der vorhergehenden Ansprüche, dadurch gekennzeichnet, daß Drehratensensor, Steuereinrichtung und Spiegelverstelleinrichtung in bzw. an der Zugmaschine eines Sattelschleppers angeordnet sind.

15. System nach einem der vorhergehenden Ansprüche, dadurch gekennzeichnet, daß Drehratensensor, Steuereinrichtung und Spiegelverstelleinrichtung im zu verstellenenden Außenspiegel angeordnet sind.

16. Außenspiegel, insbesondere für Nutzfahrzeuge, mit Spiegelgehäuse, einer Spiegelscheibe und einer elektromotorischen Spiegelverstelleinrichtung, gekennzeichnet durch ein System nach einem der vorhergehenden Ansprüche, wobei Spiegelverstelleinrichtung des Systems zur automatischen Außenspiegelverstellung bei Kurvenfahrten die elektromotrische Spiegelverstelleinrichtung des Außenspiegels ist.
